**Europäisches Patentamt**

**European Patent Office**

**Office européen des brevets**

(11) Publication number: **0 180 196**
**B1**

# EUROPEAN PATENT SPECIFICATION

(45) Date of publication of patent specification: **31.01.90**

(51) Int. Cl.<sup>5</sup>: **G 04 G 1/00, G 04 G 15/00**

(21) Application number: **85113745.5**

(22) Date of filing: **29.10.85**

(54) Programmable counter/timer device.

(30) Priority: **02.11.84 JP 230202/84**

(43) Date of publication of application:
**07.05.86 Bulletin 86/19**

(45) Publication of the grant of the patent:
**31.01.90 Bulletin 90/05**

(84) Designated Contracting States:
**DE FR GB IT**

(56) References cited:
**EP-A-0 105 932**
**GB-A-2 014 764**
**GB-A-2 027 233**
**GB-A-2 040 082**

**10e CONGRES INTERNATIONAL DE
CHRONOMETRIE, 11th-14th September 1979,
Geneva, Proceedings no. 3, pages 271-278, Conf.
no. E 2.1, Soc. Suisse de Chronométrie, Büren,
CH; C. PIGUET et al.: "Conception d'un
microprocesseur horloger"**

(73) Proprietor: **HITACHI, LTD.**
**6, Kanda Surugadai 4-chome Chiyoda-ku
Tokyo (JP)**

(72) Inventor: **Morinaga, Shigeki**
**10-12, Hanayamacho-2-chome
Hitachi-shi (JP)**
Inventor: **Watabe, Mitsuru**
**19-5-302, Ishinazakacho-1-chome
Hitachi-shi (JP)**

(74) Representative: **Patentanwälte Beetz sen. -
Beetz jun. Timpe - Siegfried - Schmitt-Fumian
Steinsdorfstrasse 10
D-8000 München 22 (DE)**

(56) References cited:

**IMPLEMENTING FUNCTIONS:
MICROPORCESSORS AND FIRMWARE, 7th
EUROMICRO Symposium on microprocessing
and microprogramming, 8th-10th September
1981, Paris, pages 431-442, North-Holland Publ.
Comp., Amsterdam, NL; C. PIGUET et al.:
"Microcomputer design for digital watches"**

Courier Press, Leamington Spa, England.

## Description

Background of the Invention

The present invention relates to a counter/timer device, and more particularly to a programmable counter/timer device in which a counter/timer register and a capture/compare register both used for a timing operation can be freely selected from a register group made up of a plurality of registers.

In a conventional counter/timer LSI which is fabricated for and connected to a microcomputer, a single capture register and a single compare register are usually provided for each of a plurality of counter/timer registers, and it is impossible to change the functions of these registers. Further, an input terminal for applying a control signal from the outside to a counter/timer and an output terminal for delivering an output from the counter/timer to the outside are connected only to the counter/timer, and it is impossible to connect the input and output terminals to another counter/timer. Furthermore, a control register, through which a central processing unit sets the function of counter/timer register, is provided for each counter/timer register. For example, in the MC 6840 which is manufactured by the Motorola Inc. and is a typical counter/timer LSI, three counter/timer registers are provided, and one capture register, one control register, two input terminals and one output terminals are provided for each of the counter/timer registers. In the MC 6840, however, the contents of each counter/timer register are always compared with zero, and hence a compare register is absent in the strict sense. Further, the arrangement of these registers and input/output terminals is fixed.

While, a counter/timer incorporated in a single-chip microcomputer is discussed in, for example, an article entitled "Motorola's MC68HC11: Definition and Design of a VLSI Microcomputer" by J.M. Sibigtroth (IEEE MICRO, February, 1984). The single-chip microcomputer discussed in the above article has an excellent function. In this microcomputer, however, the number of counter/timer registers, the number of capture registers each for holding the number of input pulses, and the number of compare registers each for determining a time interval between pulsive outputs are all fixed. Moreover, the functions of these registers as well as the combination of counter/timer registers and capture/compare registers are fixed. Accordingly, in a case where the single-chip microcomputer is applied to the control of various apparatuses, the counter/timer part of the microcomputer will be deficient in the selection of registers. Further, as to the arrangement of I/O pins, only the output terminal of a specified counter/timer register can be selected from a plurality of terminals, but other terminals are fixed. Specifically, in a single-chip microcomputer, the number of I/O terminals is limited, and hence it is desirable to be able to freely change the connection between counter/timer registers and I/O terminals.

Summary of the Invention

An object of the present invention is to provide a programmable counter/timer device in which the number of counter/timer registers, the number of capture registers and the number of compare registers can be freely changed, in order for the device to be used for controlling various apparatuses.

A characteristic feature of the present invention resides in that a counter/timer register, a capture register and a compare register are freely selected from a plurality of registers provided in a counter/timer device. Further, another characteristic feature of the present invention resides in that unlike the conventional counter/timer in which the control register is provided for each counter/timer register, a task register is provided for each of tasks for controlling input and output processing, and a task instruction for selecting registers used as a counter/timer register, a capture register and a compare register, specifying the functions of the selected registers at the task concerned, and specifying input and output terminals, is written in the task register. Task registers in a counter/timer device are scanned to successively process the tasks, and thus the task instructions written in the task registers are executed at once.

Brief Description of the Drawings

The present invention will be more apparent from the following detailed description of a preferred embodiment taken in conjunction with the accompanying drawings, in which:

Fig. 1 is a block diagram showing an embodiment of a single-chip microcomputer, to which the present invention is applied;

Fig. 2 is a block diagram showing a counter/timer unit according to the present invention, which is included in the single-chip microcomputer of Fig. 1;

Fig. 3 is a schematic diagram showing the format of a task instruction used in the counter/timer unit of Fig. 2;

Fig. 4 is a timing chart showing the timing of operation in the counter/timer unit of Fig. 2;

Fig. 5 is a schematic diagram showing the format of a task instruction for specifying a first processing example;

Fig. 6 is a waveform chart for explaining the execution of the task instruction given by the format of Fig. 5;

Fig. 7 is schematic diagram showing the format of a task instruction for specifying a second processing example;

Fig. 8 is a waveform chart for explaining the execution of the task instruction given by the format of Fig. 7;

Fig. 9 is a schematic diagram showing the format of a task instruction for specifying a third processing example;

Fig. 10 is a waveform chart for explaining the execution of the task instruction given by the format of Fig. 9;

Fig. 11 is a schematic diagram showing the format of a task instruction for specifying a fourth processing example; and

Fig. 12 is a waveform chart for explaining the execution of the task instruction given by the format of Fig. 11.

Description of the Preferred Embodiment

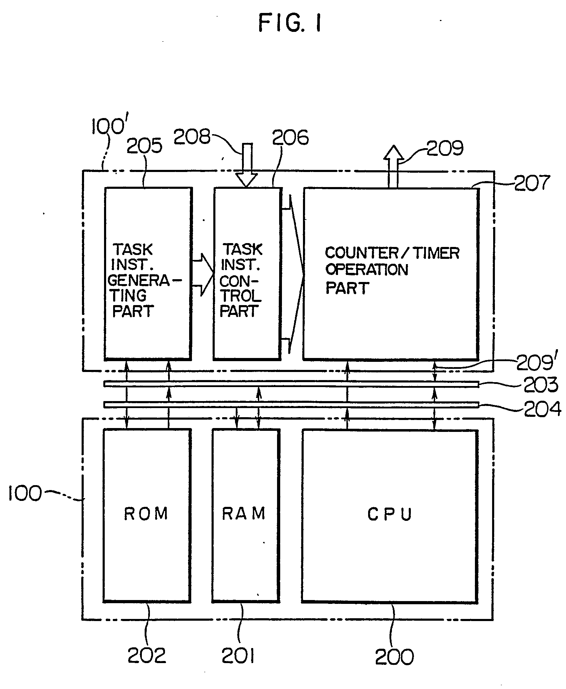

Fig. 1 shows the outline of an embodiment of a single-chip microcomputer, to which the present invention is applied. Referring to Fig. 1, a microcomputer unit 100 is made up of a CPU (namely, a central processing unit) 200, a RAM 201 serving as a data storage part, and a ROM 202 serving as a program storage part. Further, a counter/timer unit 100' is made up of a task instruction generating part 205, a task instruction control part 206 and a counter/timer operation part 207. The microcomputer unit 100 is connected to the counter/timer unit 100' through a data bus 203 and an address/control bus 204.

The task instruction generating part 205 is formed mainly of a register group which stores task instructions for specifying registers and input/output terminals used in each task and for specifying the operation mode of each of the specified registers. In the embodiment of Fig. 1, the task instructions are sent from the microcomputer unit 100 to the task instruction generating part 205 through the data bus 203, to be stored in the register group. However, in a case where tasks to be carried out in the counter/timer unit 100' have been previously determined, task instructions for carrying out the above tasks may be previously stored in a ROM (namely, a read only memory), at need. Further, this ROM may be a ROM whose contents can be altered, such as an erasable and programmable ROM or an electrically erasable and programmable ROM. The task instructions written in the task instruction generating part 205 are successively read out in a predetermined order, and sent to the counter/ timer operation part 207 through the task instruction control part 206, to control the part 207. Thus, all of the task instructions are executed at once. Incidentally, in Fig. 1, reference numeral 208 designates an input terminal group for supplying a control signal from the outside to the task instruction control part 206, and 209 and 209' output terminal groups for delivering an output signal which corresponds to the result of arithmetic/logic operation performed in the counter/ timer operation part 207, to the outside and the microcomputer unit 100.

The task instruction control part 206 generates a decoded signal for controlling the operating order and operation modes of constituent elements of the counter/timer operation part 207 in synchronism with an internal clock signal, on the basis of a task instruction from the task instruction generating part 205 and a control signal from the input terminal group 208.

The counter/timer operation part 207 performs various operations such as mentioned below. That is, in the part 207, a counter/timer register is incremented to perform a counter/timer function, the contents of a counter/timer register are transferred to a capture register, the contents of a counter/timer register are compared with the contents of a compare register, an output signal is delivered to the output terminal group 209, and so on.

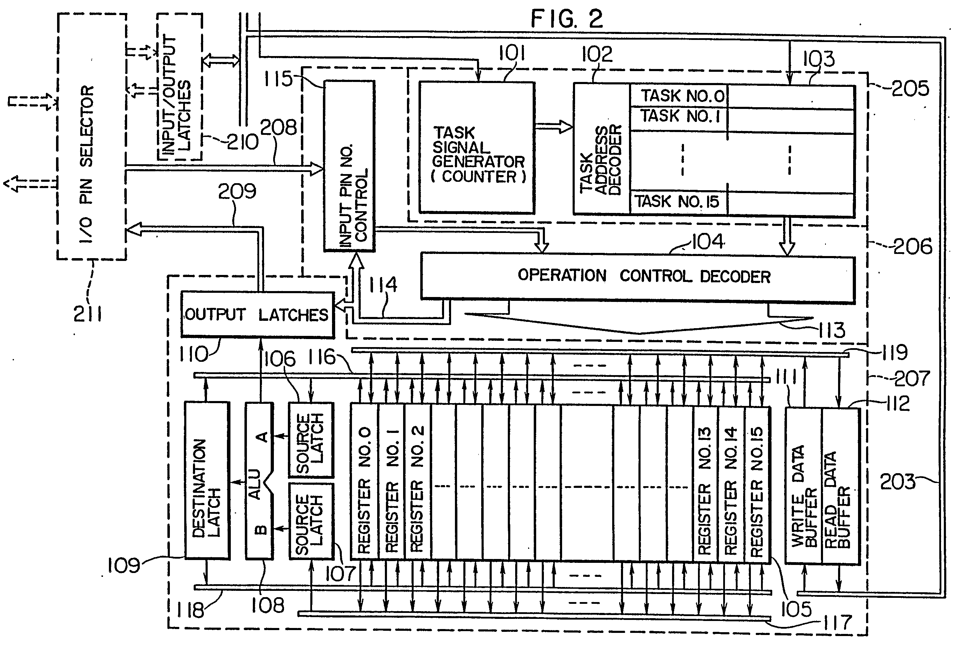

Fig. 2 shows, in block, the detailed construction of the counter/timer unit 100'. Referring to Fig. 2, the task instruction generating part 205 includes a task signal generating circuit 101 which is formed of a counter in the present embodiment, a task address decoder 102, and a task register group 103 which is made up of sixteen task registers in the present embodiment. In order to control various apparatus connected externally to the single-chip microcomputer, it is necessary to carry out a large number of input/output processing tasks. In the prior art, at least one register set made up of a counter/timer register, a capture register, a compare register, a control register, an input terminal and an output terminal is selected for each processing task, and a central processing unit specifies the operation mode of the selected counter/timer register through the control register. In this case, however, the capture or compare register and the input or output terminal included in the selected register set may become useless depending upon the contents of the task, and thus the prior art involves waste.

While, according to the present invention, a number of task instructions are stored in the task register group 103, and task numbers are successively generated by the task signal generating circuit 101. The task numbers are supplied to the task register group 103 through the task address decoder 102, to read out a task instruction from a task register corresponding to a task number specified by the task signal generating circuit 101 and to execute the read-out task instruction.

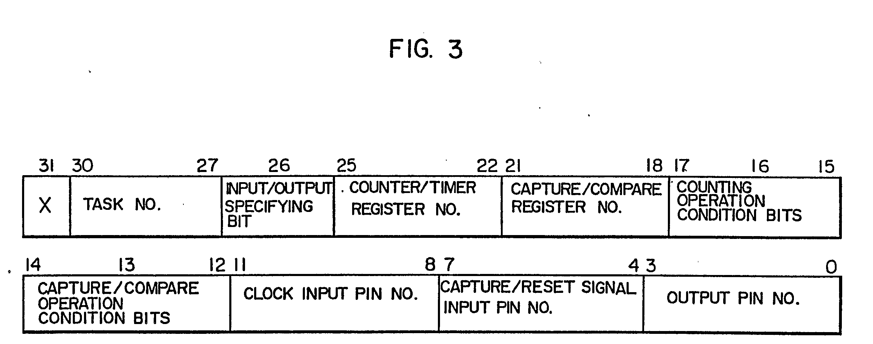

In the present embodiment, each task instruction, as shown in Fig. 3, is formed of 31 bits and includes a task number of 4 bits, an input or output specifying bit of one bit, a counter/timer register number of 4 bits, a capture/compare register number of 4 bits, a conditions in counting operation given by 3 bits, conditions in capture/ compare operation given by 3 bits, a clock input pin number of 4 bits, a capture/reset signal input pin number of 4 bits, and an output pin number of 4 bits. The task instruction read out from the task register is applied to an operation control decoder 104, to generate a control signal 113 for the counter/timer operation part 207 and an input/ output pin control signal 114. An input pin number control circuit 115 is used for controlling the application of signals from the input terminal group 208 to the operation control decoder 104.

The counter/timer operation part 207 includes a register group 105 which, in the present embodiment, is formed of 16 registers each capable of being specified as a desired one of a counter/ timer register, a capture register and a compare register, the first source latch 106, the second source latch 107, an arithmetic unit (ALU) 108 for performing arithmetic/logical operations (such as incrementing operation, shift operation, etc.) in counter/timer processing, a destination latch 109 for supplying the result of the arithmetic/logic operation performed by the ALU 108 to buses 116 and 118, an output latch group 110 for delivering an output from the ALU 108 to the output terminal group 209, a write data buffer 111 for receiving data from the microcomputer unit 100 through the data bus 203 to write the data in the register group 15, and a read data buffer 112 for supplying data to the data bus 203.

When a task instruction is read out from a task register of the task register group 103, a register which is included in the register group 105 and specified by the task instruction, is accessed at an appropriate time by the action of the operation control decoder 104, to carry out a counter/timer operation and input/output processing. The ALU 108 performs operations such as the increment of an input thereto and the comparison between two inputs. The decoding operation may be unnecessary in the task instruction control part 206, if for example a task instruction is so designed that each bit of the task instruction corresponds to each of the operations of the counter/timer operation part 207.

The register group 105, the first source latch 106, the second source latch 107, the destination latch 109, the write data buffer 111 and the read data buffer 112 are connected to one another through at least one of the first and second read buses 116 and 117 each for inputting read data, a write bus 118 for outputting write data, and an interface bus 119 for receiving data from and supplying data to the data bus 203 of the microcomputer.

The output latch group 110 is used for holding the result of comparison obtained when a comparing operation is performed. An output from the output latch group 110 is given to the output terminal group 209. Which of output latches included in the latch group 110 is applied with the result of comparison from the ALU 108, is determined by the input/output pin control signal 114 from the operation control decoder 104.

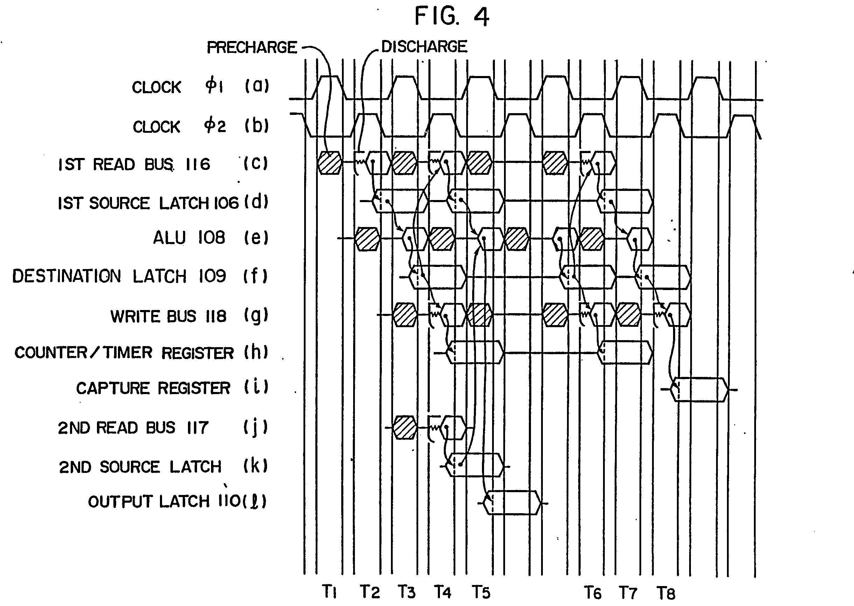

Fig. 4 is a timing chart showing a data flow in the counter/timer operation part 207. The counter/timer operation part 207 is operated by the first clock signal $\phi_1$ and the second clock signal $\phi_2$ which are shown in parts (a) and (b) of Fig. 4, respectively and are 180° out of phase with each other to form a two-phase clock signal. Further, the non-overlapping first and second clock signals $\phi_1$ and $\phi_2$ are also used as an internal clock signal of the microcomputer unit 100. Now, explanation will be made on a case where, on the basis of a task instruction, a counter/timer register is incremented and then the contents of the counter/timer register are compared with the contents of a compare register, by way of example. Part (c) of Fig. 4 shows the state of the first read bus 116. In a period $T_1$ when the first clock signal $\phi_1$ takes a level "1", the first read bus 116 is precharged. In a period $T_2$ when the second clock signal takes the level "1", the contents of a register which is included in the register group 105 and has been specified as a counter/timer register by the task instruction, are fetched to the first read bus 116, and hence the bus 116 begins to discharge in accordance with the fetched contents. Thus, the contents of the above register (namely, the counter/timer register) appear on the bus 116. The data on the bus 116 is latched by the first source latch 106 in the period $T_2$ when the second clock signal $\phi_1$ takes the level "1". Part (d) of Fig. 4 shows the state of the first source latch 106. As shown in part (d) of Fig. 4, the data on the bus 116 is latched by the first source latch 106 at the falling edge of the second clock signal $\phi_2$ in the period $T_2$. The data latched by the first source latch 106 is applied to an A-terminal of the ALU 108 which has been precharged in the period $T_2$ when the second clock signal $\phi_2$ takes the level "1". While, data applied to a B-terminal of the ALU 108 is set to zero, since the task instruction has specified a mode in which the counter/timer register is incremented, and the input to the B-terminal is not required. The ALU 108 performs an operation necessary for incrementing the counter/timer register, in accordance with a control signal from the operation control decoder 104. In other words, the ALU 108 increments the contents of the counter/timer register which are applied to the A-terminal, by one. The incremented data from the ALU 108 is applied to the destination latch 109, to be latched in a period $T_3$ when the first clock signal $\phi_1$ takes the level "1". Part (f) of Fig. 4 shows the state of the destination latch 109. Next, the output of the destination latch 109 is applied to the write bus 118 and first read bus 116 which have been precharged in the period $T_3$ when the first clock signal $\phi_1$ takes the level "1". The state of the bus 118 and the state of the bus 116 are shown in parts (g) and (c) of Fig. 4, respectively. In more detail, the first read bus 116 and the write bus 118 discharge in accordance with the contents of the destination latch 109, in a period $T_4$ when the second clock signal $\phi_2$ takes the level "1". Thus, data held by the destination latch 109 appears on the buses 116 and 118. The data on the first read bus 116 is written in the first source latch 106. While, the data on the write bus 118 is returned to the register which is included in the register group 105 and specified as the counter/timer register by the task instruction, as shown in part (h) of Fig. 4. In other words, the incremented data from the destination latch 109 is written in the first source latch 106 to prepare for the subsequent comparing operation, and is written in the register which is specified as the counter/timer register, to cause this register to act as a counter.

While, reference data previously stored in a register which is included in the register group 105 and specified as a compare register, is written in the second source latch 107 through the second read bus 117. The write-in operation will be explained below, with reference to parts (j) and (k) of Fig. 4. Referring to part (j) of Fig. 4, the second read bus 117 is precharged in the period $T_3$ when

the first clock signal $\phi_1$ takes the level "1", and discharges in accordance with the reference data held by the compare register, in the period $T_4$ when the second clock signal $\phi_2$ takes the level "1". Thus, the reference data of the compare register appears on the second read bus 117. The reference data on the bus 117 is written in the second source latch 107 in the period $T_4$ when the second clock signal $\phi_2$ takes the level "1", as shown in part (k) of Fig. 4.

The output of the first source latch 106 and the output of the second source latch 107 are applied to the A-terminal and B-terminal of the ALU 108, respectively. As soon as a comparing operation at the ALU 108 is completed in a period $T_5$ when the first clock signal $\phi_1$ takes the level "1", the result of comparison is held by a latch which is included in the output latch group 110 and specified by the input/output pin control signal 114, as shown in part (l) of Fig. 4. It is to be noted that the precharge and discharge actions of each of the buses 116, 117 and 118 are controlled by control signals from the operation control decoder 104.

Next, explanation will be made on a case where data held by a counter/timer register is transferred to a capture register, on the basis of a task instruction.

Data held by a counter/timer register which is specified by a task instruction, is fetched into the first source latch 106, in the same manner as mentioned above. In order to transfer the data held by the counter/timer register to a capture register, it is necessary to sent the data to the destination latch 109 as it is, and to write the output data of the destination latch 109 to a register which is included in the register group 105 and specified as a capture register by the task instruction, through the write bus 118.

Referring to part (c) of Fig. 4, the first read bus 116 discharges in accordance with the output of the destination latch 109 in a period $T_6$ when the second clock signal $\phi_2$ takes the level "1", to obtain the output of the destination latch 109 on the first read bus 116. The data on the bus 116 is written in the first source latch 106 as shown in part (d) of Fig. 4. The data written in the latch 106 is applied to the A-terminal of the ALU 108, and the ALU 108 writes the same data as applied to the A-terminal, in the destination latch 107 in a period $T_7$ when the first clock signal $\phi_1$ takes the level "1". The write bus 118 which has been precharged in the period $T_7$, discharges in accordance with the data of the destination latch 109 in a period $T_8$ when the second clock signal $\phi_2$ takes the level "1", to obtain the data of the destination latch 109 on the write bus 118 as shown in part (g) of Fig. 4. The data on the write bus 118 is written in the register which is included in the register group 105 and specified as a capture register by the task instruction, as shown in part (i) of Fig. 4.

Control signals for controlling constituent elements of the counter/timer operation part 207 in a predetermined order and in predetermined periods as mentioned above, are delivered from the operation control decoder 104 in accordance with a task instruction.

Next, explanation will be made of how the contents of task instruction are varied depending upon the kind of task and what kind of output waveform is obtained in accordance with the contents of task instruction.

In the format of task instruction shown in Fig. 3, the 31st bit is not used, and task numbers specified by the 30th to 27th bits indicate addresses allotted to task registers of the task register group 103. In the present embodiment, each of 16 task registers is specified by the above four bits. For example, the first task register is specified by the above four bits. For example, the first task register is specified by a value "0001" of the above four bits. The task instruction generating part 205 uses the bits 30—27 to load a task instruction received from the CPU 200 in the corresponding task register in accordance with the contents of the bits 30—27. Thus, the bits 30—27 may be unnecessary if the system is so modified that the CPU 200 itself loads a task instruction in the corresponding task register. The input/output specifying bit which is the 26th bit, indicates one of the input processing (that is, data in a register which is specified as a counter/timer register by a task instruction is transferred to a capture register, to be read out by the CPU) and the output processing (that is, reference data is written in a register which is specified as a compare register as a task instruction, to be compared with data in a register which is specified as a counter/timer register). In more detail, when the input/output specifying bit takes a value "0", the input processing is specified. When the above bit takes a value "1", the output processing is specified.

The counter/timer register number given by the 25th to 22nd bits indicates the number of the register which is included in the register group 105 and specified as a counter/timer register. For example, when the counter/timer register number takes a value "0011", the third register (namely, the register No. 3) in the register group 105 is the counter/timer register for the task instruction.

The capture/compare register number given by the 21st to 18th bits indicates the number of the register which is included in the register group 105 and specified as a capture or compare register. For example, when the capture/compare register number takes a value "0101", the fifth register (namely, the register No. 5) in the register group 105 is the capture register for a case where the CPU carries out the input processing on the basis of the task instruction, or the compare register for a case where the CPU carries out the output processing.

Conditions in counting operation given by the 17th to 15th bits indicate conditions, under which a counter/timer register performs a counting operation. The three bits includes a clock specifying bit, a counting-operation control bit and a reset control bit. When the clock specifying bit takes a value "0", an internal clock signal is used as clock pulses for a counter/timer operation. When the clock specifying bit takes a value "1", an external clock signal is used as clock pulses for the counter/timer operation. The counting operation (namely, the increment of an input) is inhibited or allowed, in accordance with whether the counting-operation control bit takes the value "0" or "1". Further, when the reset control bit takes a value "0", a counter/timer register is not reset by an external trigger input from a specified input pin. When the reset control bit takes a value "1", the counter/timer register is reset by the external trigger input.

Conditions in capture/compare operation given by the 14th to 12th bits indicate whether or not a counter/timer register is reset after the transfer of data in the input processing, whether or not a counter/timer register is reset after the comparison between data in the output processing, and whether or not a logical value "1" is delivered for the result of comparison in the output processing. The 14th bit is a post-transfer control bit for controlling the operation of a counter/timer register after data stored in the counter/timer register has been transferred to a capture register. When the post-transfer control bit takes a value "0", the counter/timer register is not reset after the transfer of data. When the post-transfer control bit takes a value "1", the counter/timer register is reset after the transfer of data.

The 13th bit is a post-coincidence control bit for determining whether or not a counter/timer register is reset after data stored in the counter/timer has been judged to be coincident with data stored in a compare register, and the 12th bit is a logical value specifying bit for determining which of logical values "0" and "1" is outputted when data stored in a counter/timer register is judged to be coincident with or greater than data stored in a compare register.

In more detail, when the post-transfer control bit takes a value "0", the counter/timer register is not reset after data stored in the counter/timer register has coincided with data stored in the compare register. When the post-transfer control bit takes a value "1", the counter/timer register is reset after the above two data have coincided with each other. In a case where the logical value specifying bit takes a value "0", a logical value "0" is sent to a specified output pin in the output latch group when data stored in the counter/timer register coincides with or becomes greater than data stored in the compare register. In a case where the logical value specifying bit takes a value "1", a logical value "1" is sent to the specified output pin in the output latch group when data stored in the counter/timer register coincides with or becomes greater than data stored in the compare register.

The 11th to eighth bits specify the number of the clock input pin. In other words, when the external clock signal is specified by the 17th bit in a task instruction, one of external input/output pins which is specified by the above bits, is applied with the external clock signal.

The seventh to fourth bits specify the number of the capture/reset signal input pin. Similarly to the number of the clock input pin, the number of the pin which is included in the external input/output pins and is applied with a capture signal (that is, a transfer signal) in the input processing, or applied with a trigger signal for resetting a counter/timer register in the output processing, is indicated by the seventh to fourth bits.

The third to zero-th bits specify the number of the pin which is included in the external input/output pins and used as an output pin in the output processing indicated by a task instruction.

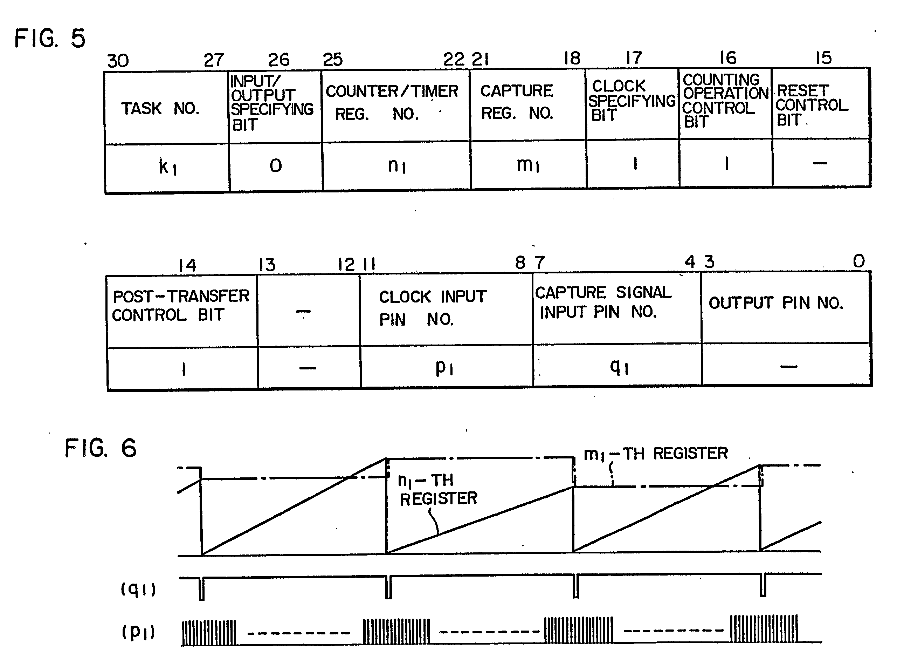

Next, explanation will be made on examples of input/output functions which can be realized by using the format of Fig. 3, with reference to Figs. 5 to 12.

Fig. 5 shows a task instruction specifying the following operation. That is, a task instruction stored in the k-th task register of the task register group 103 specifies the input processing. The $n_1$-th and $m_1$-th registers of the register group 105 are used as a counter/timer register and a capture register, respectively. The counter/timer register performs a counting operation for an external clock signal ($p_1$) applied to the $p_1$-th pin. When a capture signal ($q_1$) applied to the $q_1$-th pin takes a level "0", data held by the counter/timer register (namely, the $n_1$-th register) is transferred to the capture register (namely, the $m_1$-th register), and then the counter/timer register (namely, the $n_1$-th register) is reset. In this case, the counter/timer operation part operates as shown in Fig. 6, in accordance with the task instruction. As is apparent from Fig. 6, the $n_1$-th register (namely, the counter/timer register) is reset each time a trigger pulse ($q_1$) from the $q_1$-th pin is applied to the counter/timer register, and counts up the external clock pulses ($p_1$) from the $p_1$-th pin.

Further, the contents of the counter/timer register are transferred to the $m_1$-th register (namely, the capture register) each time the trigger pulse is applied to the $q_1$-th pin. It is to be noted that the contents of a register are given by analog representation in Figs. 6, 8, 10 and 12.

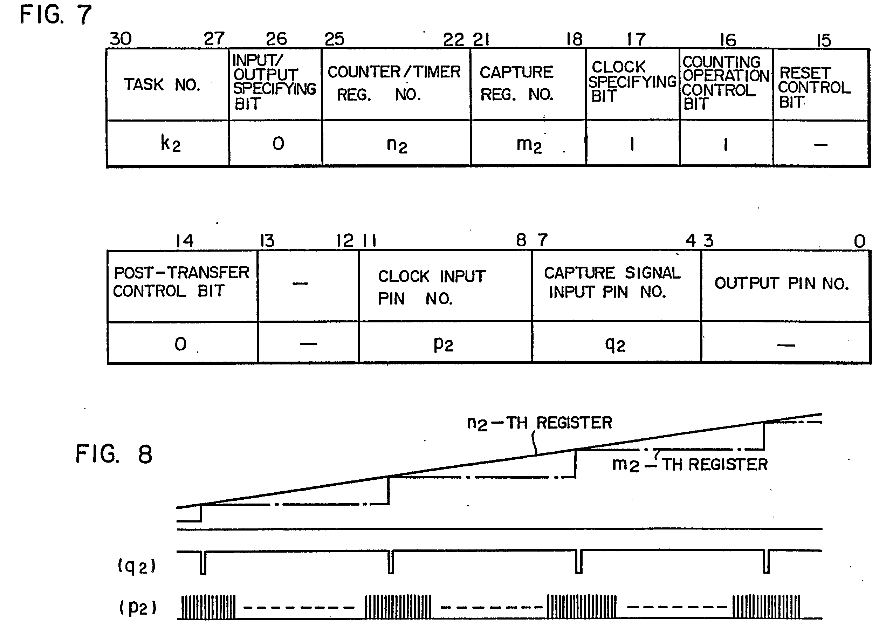

Fig. 7 shows a task instruction specifying the following operation. That is, the counter/timer operation part performs an operation similar to the operation specified by the task instruction of Fig. 5, but a counter/timer register (namely, the $n_2$-th register) continues a counting operation without being reset after data in the counter/timer register has been transferred to a capture register (namely, the $m_2$-th register), since the 14th bit has a value "0". In this case, the counter/timer operation part operates as shown in Fig. 8, in accordance with the task instruction. That is, the contents of the $n_2$-th register (namely, the counter/timer register) which counts up external clock pulses ($p_2$) supplied from a $p_2$-th pin, are transferred to the $m_2$-th register (namely, the capture register) each time a trigger pulse ($q_2$) from a $q_2$-th pin is applied to the counter/timer register.

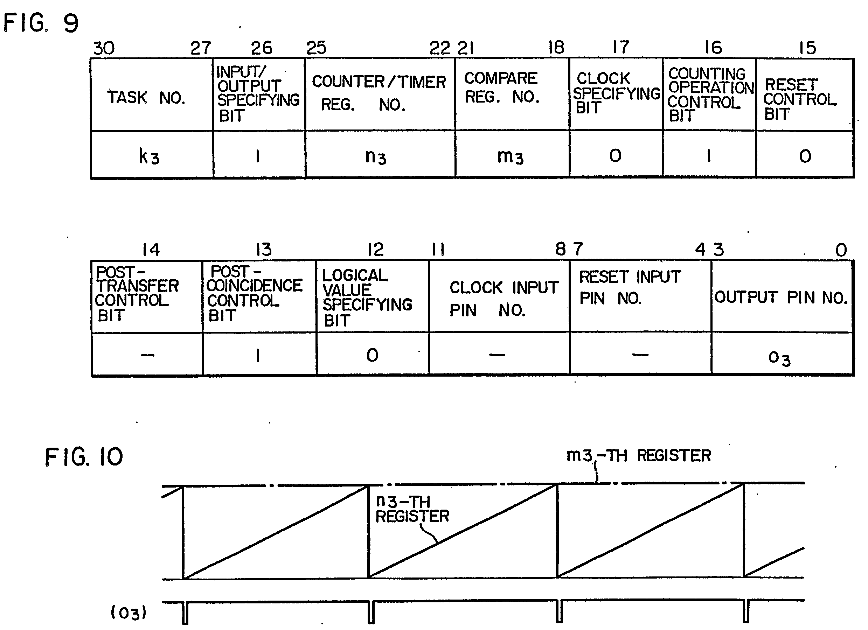

Fig. 9 shows a task instruction for generating a constant interval or the like. Referring to Fig. 9, the task instruction is stored in the $k_3$-th task register of the task register group 103, and specifies the output processing since the 26th bit has a value "1". The $n_3$-th register and the $m_3$-th register of the register group 105 are used as a counter/timer register and a compare register, respectively.

The counter/timer register performs a counting operation for an internal clock signal, since the clock specifying bit (namely, the 17th bit) has a value "0".

Data in the counter/timer register is compared with data in the compare register. When the data in the counter/timer register coincides with or becomes greater than the data in the compare register, a logical value "0" is delivered to the $o_3$-th pin and the counter/timer register is reset, since the logical value specifying bit (namely, the 12th bit) has a value "0" and the post-coincidence control bit (namely, the 13th bit) has a value "1". Fig. 10 shows the operation of the counter/timer operation part based upon the task instruction of Fig. 9. Referring to Fig. 10, when the contents of the $n_3$-th register (namely, the counter/timer register) coincide with the contents of the $m_3$-th register (namely, the compare register), an output pulse ($o_3$) is delivered to the $o_3$-th pin and the $n_3$-th register is reset.

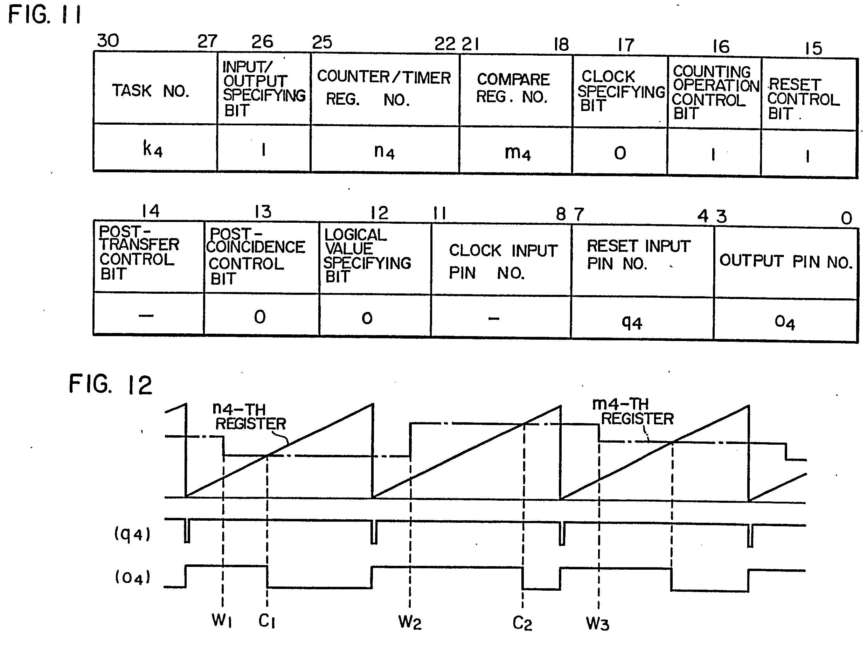

Fig. 11 shows a task instruction for controlling a duty ratio. Referring to Fig. 11, the task instruction is stored in the $k_4$-th task register of the task register group 103, and specifies the output processing since the 26th bit has a value "1". The $n_4$-th register and the $m_4$-th register of the register group 105 are used as a counter/timer register and a compare register, respectively, since the 25th to 22nd bits indicate the value "$n_4$" and the 21st to 18th bits indicate the value "$m_4$".

The counter/timer register performs a counting operation for an internal clock signal, since the 17th bit (namely, the clock specifying bit) has a value "0". The counter/timer register is reset by a reset pulse ($q_4$) from the $q_4$-th pin. Data in the counter/timer register is compared with data in the compare register. When the data in the counter/timer register coincides with or becomes greater than the data in the compare register, a logical value "0" is delivered to the $o_4$-th pin, since the 12th pin (namely, the logical value specifying bit) has a value "0".

Fig. 12 shows the operation of the counter/timer operation part based upon the task instruction of Fig. 11. It is to be noted that different reference data are written in the $m_4$-th register (namely, the compare register) at time moments $W_1$, $W_2$ and $W_3$. The $n_4$-th register (namely, the counter/timer register) counts up internal clock pulses (not shown). When the contents of the counter/timer register become greater than the contents of the compare register which has been loaded with the first reference data at the time moment $W_1$, at a time $C_1$, an output signal ($o_4$) supplied to the $o_4$-th pin is put to a level "0". The counter/timer register continues to count up the internal clock pulses, but is reset when the reset pulse ($q_4$) is applied to the $q_4$-th pin, since the reset control bit (the 15th bit) of the task instruction is set to "1". Thus, the contents of the counter/timer register become smaller than those of the compare register, and hence the output signal ($o_4$) is returned to a level "1". Thereafter, the compare register is loaded with the second reference data which is greater than the first reference data, at the time moment $W_2$. When the contents of the counter/timer register become equal to the second reference data at a time $C_2$, the output signal ($o_4$) is put to the level "0". As is apparent from Fig. 12, the task instruction of Fig. 11 produces an output waveform having different duty ratios.

When the task instructions of Figs. 5, 7, 9 and 11 are stored in the task register group 103 of Fig. 2 and are successively scanned by the task signal generating circuit 101, the above-mentioned four counter/timer operations can be performed at once.

Referring back to Fig. 2, if an input/output latch group 210 is connected to the data bus 203 of the microcomputer, and an input/output pin selector 211 is provided for controlling the connection of the latch group 210 with the output terminal group 209 and input terminal group 208 by an instruction from the CPU, input/output pins which are not specified by task instructions to be executed, can be used as parallel I/O pins.

In each of the task instructions of Figs. 5, 7, 9 and 11, only two different registers of the register group 105 are specified. However, the present invention is not limited to such task instructions, but a task instruction specifying three or more registers of the register group 105 can also be used.

Further, in a case where it is required only to count up internal clock pulses by a counter/timer register, only a single register of the register group 105 may be specified by a task instruction.

As is evident from the foregoing explanation, in a counter/timer device according to the present invention, different task instructions which are to be executed at once, can specify a single register of the register group in common. Moreover, the common register may be specified as a counter/timer register in a task instruction and as a compare register in another task instruction. Accordingly, a counter/timer device according to the present invention can perform a more complicated counter/timer operation, as compared with a conventional counter/timer device.

In short, according to the present invention, the number of counter/timer registers used in the input and output processing, the number of capture registers used in these processing and the number of compare registers used in the above processing are not fixed, but a counter/timer register, a capture register and a compare register can be freely selected from a register group by a simple instruction. Hence, a counter/timer device according to the present invention can be used for controlling various apparatuses.

Further, according to the present invention, desired pins can be freely selected from an external pin group by a task instruction, and therefore the pin group can be used very effectively. Accordingly, a counter/timer device according to the present invention is advantageously incorporated in a single-chip microcomputer, in which the number of input/output pins is limited.

When the clock signals $\phi_1$ and $\phi_2$ do not utilize the memory cycle of the CPU but utilize the machine cycle, a single-chip microcomputer including a counter/timer device according to the present invention has a high processing speed, and exhibits an excellent performance.

Further, according to the present invention, various functions in the input and output processing can be set by simple task instructions. That is, a counter/timer device according to the present invention has a high degree of freedom.

**Claims**

1. A counter/timer device comprising:

task instruction generating means (205) capable of successively generating a plurality of task instructions corresponding to counter/timer operations to be carried out, one by one;

counter/timer operation means (207) including a register group (105) made up of a plurality of registers each capable of performing any of plural register functions necessary for said counter/timer operations, arithmetic unit means (106 to 109) for performing an arithmetic/logic operation on the basis of data from said register group, and bus means (116 to 118) for transferring data between said register group and said arithmetic unit means; and

task instruction control means (206) connected between said task instruction generating means (205) and said counter/timer operation means (207), which in response to a task instruction generated by said task instruction generating means (205) specify at least one register which is included in said register group (105) of said counter/timer operation means (207) and corresponds to said task instruction, for causing said arithmetic unit means (106 to 109) to perform an arithmetic/logic operation corresponding to said task instruction on the basis of data in the specified register.

2. A counter/timer device according to Claim 1, wherein said task instruction generating means (205) includes storage means (103) for storing each of a plurality of task instructions to be executed, at an address assigned thereto, task signal generating means (101) for generating a task signal capable of successively specifying task instructions stored in said storage means (103), and task address decoding means (102) connected between said storage means (103) and said task signal generating means (101) for decoding said task signal to give said storage means an address indicated by said task signal, thereby reading out a task instruction corresponding to said task signal.

3. A counter/timer device according to Claim 2, wherein said task signal generating means (101) includes a counter circuit.

4. A counter/timer device according to Claim 2, wherein said storage means (103) is a memory, for which a microcomputer unit (100) connected to the counter/timer device can perform both a writing operation and a reading operation.

5. A counter/timer device according to Claim 2, wherein said storage means (103) is a read only memory which can be previously loaded with a task instruction to be executed.

6. A counter/timer device according to Claim 5, wherein said read only memory is an erasably programmable read-only memory in which a previously loaded task instruction can be altered.

7. A counter/timer device according to Claim 5, wherein said read only memory is an electrically erasable and programmable read-only memory in which a previously loaded task instruction can be altered.

8. A counter/timer device according to Claim 1, wherein said arithmetic unit means of said counter/timer operation means (207) includes first and second source latch means (106, 107) connected to said bus means and receiving first and second data from registers which are included in said register group (105) and specified by said task instruction control means (206), an arithmetic unit (108) connected to said first and second source latch means (106, 107) for performing an arithmetic/logic operation on the basis of data from said first and second source latch means, and destination latch means (109) connected to said arithmetic unit and said bus means for writing the result of the arithmetic/logic operation performed by said arithmetic unit in a register which is specified by said task instruction control means (206), through said bus means.

9. A counter/timer device according to Claim 8, wherein said counter/timer operation means (207) further includes an output latch group (110) connected to said arithmetic unit (108) for delivering the result of an arithmetic/logic operation performed by said arithmetic unit, to the outside.

10. A counter/timer device according to Claim 9, wherein said output latch group (110) is connected to said task instruction control means (206), to select an output latch from said output latch group (110) in accordance with the contents of a task instruction controlled by said task instruction control means (206), and said result of the arithmetic/logic operation performed by said arithmetic unit (108) is delivered to the outside through the selected output latch.

11. A counter/timer device according to Claim 1, wherein said task instruction control means (206) further includes external signal input means (115) for selectively receiving external input signals in accordance with a task instruction from said task instruction generating means (205).

12. A counter/timer device according to Claim 10, wherein said task instruction control means (206) further includes external signal input means (115) for selectively receiving external input signals in accordance with a task instruction from said task instruction generating means (205), and wherein the counter/timer device further comprises an input/output latch group (210) for which a microcomputer unit (100) connected to said counter/timer device can perform both a writing operation and a reading operation, and input/output pin selector means (211) connected to both said output latch group (110) of said counter/timer operation means (207) and said external signal input means (115) of said task instruction control means (206) for connecting external input/output pins other than external pins used in a task instruction to be executed, to said input/output latch group (210).

13. A counter/timer device according to Claim 2, wherein each of registers included in said register group (105) of said counter/timer operation means (207) performs one of the function of a counter/timer register, the function of a capture register and the function of a compare register, under the control of said task instruction control means (206).

14. A counter/timer device according to Claim 13, wherein each of said to-be-executed task instructions stored in said storage means (103) is formed of a plurality of bits, and said bits include a bit portion for specifying a register in said register group (105) of said counter/timer operation means (207) as a register which is to function as a counter/timer register, a bit portion for specifying another register in said register group (105) as a register which is to function as one of a capture register and a compare register, and a bit portion for specifying the operation mode of each of the specified registers.

15. A counter/timer device according to Claim 1, wherein said counter/timer device is incorporated in a single-chip microcomputer together with a microcomputer unit (100) connected to the counter/timer device.

16. A single-chip microcomputer comprising:
a microcomputer unit (100) including a central processing unit (200), a program storage part (202) for storing programs which are to be executed by said central processing unit, and a data storage part (201) for storing data which is used in executing said programs; and
a counter/timer unit (100') connected to said microcomputer unit (100) and including task instruction generating means (205) capable of successively generating a plurality of task instructions corresponding to counter/timer operations to be carried out, one by one, task instruction control means (206) responsive to each of task instructions successively generated by said task instruction generating means (205) to generate a control signal, and counter/timer operation means (207) for performing a counter/timer operation corresponding to each of the successively generated task instructions, in response to said control signal.

17. A single-chip microcomputer according to Claim 16, wherein said counter/timer operation means (207) includes a register group (105) made up of a plurality of registers each capable of performing any of plural register functions necessary for said counter/timer operations, arithmetic unit means (106 to 109) for performing an arithmetic/logic operation on the basis of data from said register group (105), and bus means (116 to 118) for transferring data between said register group and said arithmetic unit means.

18. A single-chip microcomputer according to Claim 17, wherein each of task instructions generated by said task instruction generating means (205) is formed of a plurality of bits, and said bits include bits for specifying registers in said register group (105) of said counter/timer operation means (207) as registers which are to be used in one of said task instructions, and bits for specifying the operation mode of each of the specified registers.

**Patentansprüche**

1. Zähler-Zeitgeberschaltung, die enthält:
eine Task-Befehlserzeugungseinrichtung (205), die aufeinanderfolgend eine Vielzahl von Task-Befehlen erzeugt, die in einer 1:1 Entsprechung zu auszuführenden Zähler-Zeitgeberoperationen stehen;
eine Zähler-Zeitgeberoperationseinrichtung (207), die eine Registergruppe (105) bestehend aus einer Vielzahl von Registern, die jeweils jede Funktion aus einer Vielzahl von für die Zähler-Zeitgeberoperationen nötigen Registerfunktionen ausführen können, eine Arithmetikeinheit (106 bis 109), die die Daten von der Registergruppe arithmetischen und logischen Operationen unterwirft und Buseinrichtungen (116 bis 118) enthält, die die Daten zwischen der Registergruppe und der Arithmetikeinheit überträgt; und
eine Task-Befehlssteuereinrichtung (206), die zwischen die Task-Befehlserzeugungseinrichtung (205) und die Zähler-Zeitgeberoperationseinrichtung (207) eingeschaltet ist und die ansprechend auf einen von der Task-Befehlserzeugungseinrichtung (205) erzeugten Task-Befehl mindestens ein Register kennzeichnet, das in der Registergruppe (105) der Zähler-Zeitgeberoperationseinrichtung (207) enthalten ist und dem Task-Befehl entspricht, um dadurch die Arithmetikeinheit (106 bis 109) zur Ausführung einer Arithmetik/Logikoperation entsprechend dem Task-Befehl auf der Basis der Daten im gekennzeichneten Register zu veranlassen.

2. Zähler-Zeitgeberschaltung nach Anspruch 1, dadurch gekennzeichnet, daß die Task-Befehlserzeugungseinrichtung (205) eine Speichereinrichtung (103), die unter einer dem auszuführenden Task-Befehl zugeordneten Adresse die Vielzahl der auszuführenden Task-Befehle speichert, eine Task-Signalerzeugungseinrichtung (101) für die Erzeugung eines Task-Signals, das aufeinanderfolgend die in der Speichereinrichtung (103) gespeicherten Task-Befehle kennzeichnen kann, und eine Task-Adressen-Dekodiereinrichtung (102) aufweist, die zwischen der Speichereinrichtung (103) und der Task-Signalerzeugungseinrichtung (101) eingeschaltet ist, um das Task-Signal zu dekodieren und an die Speichereinrichtung eine durch das Task-Signal angegebene Adresse zu übergeben, wodurch entsprechend dem Task-Signal ein Task-Befehl ausgelesen wird.

3. Zähler-Zeitgeberschaltung nach Anspruch 2, dadurch gekennzeichnet, daß die Task-Signalerzeugungseinrichtung (101) eine Zählerschaltung enthält.

4. Zähler-Zeitgeberschaltung nach Anspruch 2, dadurch gekennzeichnet, daß die Speichereinrichtung (103) ein Speicher ist, der durch eine mit der Zähler-Zeitgeberschaltung verbundene Mikrocomputereinheit (100) beschrieben und ausgelesen werden kann.

5. Zähler-Zeitgeberschaltung nach Anspruch 2, dadurch gekennzeichnet, da die Speichereinrichtung (103) ein Nur-Lesespeicher ist, der zuvor mit einem auszuführenden Task-Befehl geladen werden kann.

6. Zähler-Zeitgeberschaltung nach Anspruch 5, dadurch gekennzeichnet, daß der Nur-Lesespeicher ein lösch- und programmierbarer Speicher ist, der eine Änderung eines zuvor geladenen Task-Befehls erlaubt.

7. Zähler-Zeitgeberschaltung nach Anspruch 5, dadurch gekennzeichnet, daß der Nur-Lesespeicher ein elektrisch lösch- und programmierbarer Speicher ist, der eine Änderung eines zuvor geladenen Task-Befehls gestattet.

8. Zähler-Zeitgeberschaltung nach Anspruch 1, dadurch gekennzeichnet, daß die Arithmetikeinheit der Zähler-Zeitgeberoperationseinrichtung (207) eine erste und eine zweite Quellen-Latch-Einrichtung (106, 107), die mit der Buseinrichtung verbunden ist und von den in der Registergruppe (105) enthaltenen und von der Task-Befehlsteuereinrichtung (206) gekennzeichneten Registern erste und zweite Daten empfängt, eine Arithmetikschaltung (108), die mit der ersten und zweiten Quellen-Latch-Einrichtung (106, 107) verbunden ist und Arithmetik- und Logikoperationen aufgrund den von der ersten und zweiten Quellen-Latch-Einrichtung (106, 107) empfangenen Daten durchführt, und eine Ziel-Latch-Einrichtung (109) aufweist, die mit der Arithmetikschaltung und der Buseinrichtung verbunden ist, um das Ergebnis der von der Arithmetikschaltung ausgeführten Arithmetik- oder Logikoperation über die Buseinrichtung in ein von der Task-Befehlssteuereinrichtung (206) gekennzeichnetes Register zu setzen.

9. Zähler-Zeitgeberschaltung nach Anspruch 8, dadurch gekennzeichnet, daß die Zähler-Zeitgeberoperationseinrichtung (207) außerdem eine mit der Arithmetikschaltung (108) verbundene Ausgabe-Latch-Gruppe aufweist, die das Ergebnis einer von der Arithmetikschaltung ausgeführten Operation nach außen führt.

10. Zähler-Zeitgeberschaltung nach Anspruch 9, dadurch gekennzeichnnet, daß die Ausgabe-Latch-Gruppe (110) mit der Task-Befehlssteuereinrichtung (206) verbunden ist, um aus der Ausgabe-Latch-Gruppe (110) ein Ausgabe-Latch in Übereinstimmung mit einem von der Task-Befehlssteuereinrichtung (206) gesteuerten Task-Befehl zu wählen, und das Ergebnis der von der Arithmetikschaltung (108) ausgeführten Arithmetik- oder Logikoperation über das gewählte Ausgabe-Latch nach außen geführt wird.

11. Zähler-Zeitgeberschaltung nach Anspruch 1, dadurch gekennzeichnet, daß die Task-Befehlssteuereinrichtung (206) außerdem externe Signaleingabeglieder (115) aufweist, die wahlweise externe Eingabesignale in Übereinstimmung mit einem von der Task-Befehlserzeugungseinrichtung (205) erzeugten Task-Befehl empfängt.

12. Zähler-Zeitgeberschaltung nach Anspruch 10, dadurch gekennzeichnet, daß die Task-Befehlssteuereinrichtung (206) weiterhin externe Signaleingabeglieder (115) aufweist, die wahlweise externe Eingabesignale in Übereinstimmung mit einem Task-Befehl von der Task-Befehlserzeugungseinrichtung (205) empfangen, und die Zähler-Zeitgeberschaltung weiterhin eine Eingabe/ Ausgabe-Latch-Gruppe (210), welche durch eine mit der Zähler-Zeitgeberschaltung verbundene Mikrocomputereinheit (100) beschrieben und ausgelesen werden kann und ein Eingabe/ Ausgabe-Pin-Wählschaltung (211) aufweist, die mit der Ausgabe-Latch-Gruppe (110) der Zähler-Zeitgeberoperationseinrichtung (207) und den externen Signaleingabegliedern (115) der Task-Befehlssteuereinrichtung (206) verbunden ist, um äußere Eingabe/Ausgabe-Pins, die andere Pins sind als die in einem auszuführenden Task-Befehl verwendeten äußeren Pins, mit der Eingabe/Ausgabe-Latch-Gruppe (210) zu verbinden.

13. Zähler-Zeitgeberschaltung nach Anspruch 2, dadurch gekennzeichnet, daß jedes Register in der Registergruppe (105) der Zähler-Zeitgeberoperationseinrichtung (207) gesteuert von der Task-Befehlssteuereinrichtung (206) entweder die Funktion eines Zähler-Zeitgeberregisters, die Funktion eines Auffangregisters oder die Funktion eines Vergleichsregisters ausführt.

14. Zähler-Zeitgeberschaltung nach Anspruch 13, dadurch gekennzeichnet, daß jeder in der Speichereinrichtung (103) gespeicherte und auszuführende Task-Befehl aus mehreren Bits besteht, die einen Bit-Abschnitt zur Kennzeichnung eines Registers in der Registergruppe (105) der Zähler-Zeitgeberoperationseinrichtung (207), das als Zähler-Zeitgeberregister arbeiten soll, einen Bit-Abschnitt zur Kennzeichnung eines anderen Registers in der Registergruppe (105), das die Funktion entweder eines Auffangregisters oder eines Vergleichsregisters erhalten soll und einen Bit-Abschnitt aufweist, der den Operationsmodus jedes der gekennzeichneten Register spezifiziert.

15. Zähler-Zeitgeberschaltung nach Anspruch 1, dadurch gekennzeichnet, daß diese zusammen mit einer Mikrocomputereinheit (100), die mit der Zähler-Zeitgeberschaltung verbunden ist in einem Ein-Chip-Mikrocomputer enthalten ist.

16. Ein-Chip-Mikrocomputer, gekennzeichnet durch eine Mikrocomputereinheit (100), die eine Zentralverarbeitungseinheit (200) einen programmspeicherteil (202), der von der Zentralverarbeitungseinheit auszuführende Programme speichert und einen Datenspeicherteil (201) enthält, der Daten speichert, die bei der Ausführung der Programme zu verwenden sind; und eine mit der Mikrocomputereinheit (100) verbundene Zähler-Zeitgeberschaltung (100'), die aufweist:

eine Task-Befehlserzeugungseirichtung (205), die aufeinanderfolgend eine Vielzah von auszuführenden Zähler-Zeitgeberoperationen 1:1 entsprechende Task-Befehle erzeugen kann, eine Task-Befehlssteuereinrichtung (206), die auf jeden der von der Task-Befehlserzeugungseinrichtung (205) erzeugten Task-Befehle anspricht, um daraufhin ein Steuersignal zu erzeugen, und eine Zähler-Zeitgeberoperationseinrichtung (207), die ansprechend auf das Steuersignal eine Zähler-Zeitgeberoperation in jeweiliger Übereinstimmung mit den aufeinanderfolgend erzeugten Task-Befehlen ausführt.

17. Ein-Chip-Mikrocomputer nach Anspruch 16, dadurch gekennzeichnet, daß die Zähler-Zeitgeberoperationseinrichtung (207) eine Registergruppe (105), die aus einer Vielzahl von Registern besteht, die jeweils eine von mehreren für die Zähler-Zeitgeberoperationen nötigen Registerfunktionen ausführen können, eine Arithmetikeinheit (106 bis 109) zur Ausführung einer arithmetischen oder logischen Operation auf der Basis von Daten von der Registergruppe (105) und eine Buseinrichtung (116 bis 118) aufweist, die Daten zwischen der Registergruppe und der Arithmetikeinheit überträgt.

18. Ein-Chip-Mikrocomputer nach Anspruch 17, dadurch gekennzeichnet, daß jeder der von der Task-Befehlserzeugungseinrichtung (205) erzeugten Task-Befehle aus mehreren Bits besteht, die Bits zur Kennzeichnung von Registern in der Registergruppe (105) der Zähler-Zeitgeberoperationseinrichtung (207) als Register, die in einem der Task-Befehle zu verwenden sind und Bits zur Kennzeichnung des Operationsmodus jedes der gekennzeichneten Register aufweisen.

**Revendications**

1. Dispositif compteur/temporisateur comportant:
des moyens de génération d'instruction de tâche (205) aptes à générer successivement une pluralité d'instructions de tâche correspondant à des opérations de compteur/temporisateur à exécuter, une par une;
des moyens d'opération de compteur/temporisateur (207) comprenant un groupe de registres (105) constitué d'une pluralité de registres capables chacun d'effectuer l'une quelconque de plusieurs fonctions de registre nécessaires pour lesdites opérations de compteur/temporisateur, des moyens formant une unité arithmétique (106 à 109) pour effectuer une opération arithmétique/logique en fonction de données provenant dudit groupe de registres, et des moyens formant bus (116 à 118) pour transférer des données entre ledit groupe de registres et lesdits moyens formant l'unité arithmétique; et
des moyens de commande d'instruction de tâche (206) connectés entre lesdits moyens de génération d'instruction de tâche (205) et lesdits moyens d'opération de compteur/temporisateur (207), qui, en réponse à une instruction de tâche générée par lesdits moyens de génération d'instruction de tâche (205), spécifient au moins un registre qui fait partie dudit groupe de registres (105) desdits moyens d'opération de compteur/temporisateur (207) et correspond à ladite instruction de tâche, pour amener lesdits moyens formant l'unité arithmétique (106 à 109) à effectuer une opération arithmétique/logique correspondant à ladite instruction de tâche en fonction de données dans le registre spécifié.

2. Dispositif compteur/temporisateur selon la revendication 1, dans lequel lesdits moyens de génération d'instruction de tâche (205) comprennent des moyens de mémoire (103) pour mémoriser chacune d'une pluralité d'instructions de tâche à exécuter, à une adresse qui lui est assignée, des moyens de génération de signal de tâche (101) pour générer un signal de tâche apte à spécifier successivement des instructions de tâche mémorisées dans lesdits moyens de mémoire (103), et des moyens de décodage d'adresse de tâche (102) reliés entre lesdits moyens de mémoire (103) et lesdits moyens de génération de signal de tâche (101) pour décoder ledit signal de tâche en vue de donner auxdits moyens de mémoire une adresse indiquée par ledit signal de tâche, restituant ainsi une instruction de tâche correspondant audit signal de tâche.

3. Dispositif compteur/temporisateur selon la revendication 2, dans lequel lesdits moyens de génération de signal de tâche (101) comprennent un circuit compteur.

4. Dispositif compteur/temporisateur selon la revendication 2, dans lequel lesdits moyens de mémoire (103) sont une mémoire pour laquelle un microcalculateur (100) relié au dispositif compteur/temporisateur peut effectuer à la fois une opération d'enregistrement et une opération de lecture.

5. Dispositif compteur/temporisateur selon la revendication 2, dans lequel lesdits moyens de mémoire (103) sont une mémoire figée qui peut être préalablement chargée avec une instruction de tâche à exécuter.

6. Dispositif compteur/temporisateur selon la revendication 5, dans lequel ladite mémoire figée est une mémoire figée programmable effaçable dans laquelle une instruction de tâche préalablement chargée peut être modifiée.

7. Dispositif compteur/temporisateur selon la revendication 5, dans lequel ladite mémoire figée est une mémoire figée effaçable électriquement et programmable dans laquelle une instruction de tâche précédemment chargée peut être modifiée.

8. Dispositif compteur/temporisateur selon la revendication 1, dans lequel ladite unité arithmétique desdits moyens d'opération (207) de compteur/temporisateur comprend des première et seconde bascules d'origine (106, 107) reliées auxdits moyens formant bus et recevant des première et des seconde données de registres faisant partie dudit groupe de registres (105) et spécifiés par lesdits moyens de commande d'instruction de tâche (206), une unité arithmétique (108) reliée auxdites première et seconde bascules d'origine (106, 107) pour effectuer une opération arithmétique/logique en fonction de données provenant desdites première et seconde bascules d'origine, et des bascules de destination (109) reliées à ladite unité arithmétique et auxdits moyens formant bus pour inscrire le résultat de l'opération arithmétique/logique effectuée par ladite unité arithmétique dans un registre qui est spécifié par lesdits moyens de commande d'instruction de tâche (206), par l'intermédiaire desdits moyens formant bus.

9. Dispositif compteur/temporisateur selon la revendication 8, dans lequel lesdits moyens d'opération de compteur/temporisateur (207) comprennent en outre un groupe de bascules de sortie (110) reliées à ladite unité arithmétique (108) pour délivrer le résultat d'une opération arithmétique/logique effectuée par ladite unité arithmétique, à l'extérieur.

10. Dispositif compteur/temporisateur selon la revendication 9, dans lequel ledit groupe de bascules de sortie (110) est relié auxdits moyens de commande d'instruction de tâche (206), pour choisir une bascule de sortie parmi ledit groupe de bascules de sortie (110) conformément au contenu d'une instruction de tâche commandée par lesdits moyens de commande d'instruction de tâche (206), et ledit résultat de l'opération arithmétique/logique effectuée par ladite unité arithmétique (108) est délivré à l'extérieur par l'intermédiaire de la bascule de sortie choisie.

11. Dispositif compteur/temporisateur selon la revendication 1, dans lequel lesdits moyens de commande d'instruction de tâche (206) comprennent en outre des moyens d'entrée de signaux extérieurs (115) pour recevoir sélectivement des signaux d'entrée extérieurs conformément à une instruction de tâche provenant desdits moyens de génération d'instruction de tâche (205).

12. Dispositif compteur/temporisateur selon la revendication 10, dans lequel lesdits moyens de commande d'instruction de tâche (206) comprennent en outre des moyens d'entrée de signaux extérieurs (115) pour recevoir sélectivement des signaux d'entrée extérieurs conformément à une instruction de tâche provenant desdits moyens de génération d'instruction de tâche (205), et dans lequel le dispositif compteur/temporisateur comporte en outre un groupe de bascules d'entrée/ sortie (210) pour lesquelles un microcalculateur (100) relié audit dispositif compteur/temporisateur peut effectuer à la fois une opération d'enregistrement et une opération de lecture, et des moyens de sélection de broche d'entrée/sortie (211) reliés à la fois audit groupe de bascules de sortie (110) desdits moyens d'opération de compteur/temporisateur (207) et auxdits moyens d'entrée de signaux extérieurs (115) desdits moyens de commande d'instruction de tâche (206) pour relier des broches d'entrée/sortie extérieures autres que les broches extérieures utilisées dans une instruction de tâche à exécuter, audit groupe de bascules d'entrée/sortie (210).

13. Dispositif compteur/temporisateur selon la revendication 2, dans lequel chacun des registres dudit groupe de registres (105) desdits moyens d'opération de compteur/temporisateur (207) joue le rôle d'un registre de compteur/temporisateur, le rôle d'un registre de saisie et le rôle d'un registre de comparaison, sous la commande desdits moyens de commande d'instruction de tâche (206).

14. Dispositif compteur/temporisateur selon la revendication 13, dans lequel chacune desdites instructions de tâche à exécuter mémorisées dans lesdits moyens de mémoire (103) est constituée d'une pluralité de bits, lesdits bits comprennent une partie de bits pour spécifier un registre dans ledit groupe de registres (105) desdits moyens d'opération de compteur/temporisateur (207) en tant que registre devant jouer le rôle de registre de compteur/ temporisateur, une partie de bits pour spécifier un autre registre dans ledit groupe de registres (105) en tant que registre devant jouer le rôle d'un registre de saisie et d'un registre de comparaison, et une partie de bits pour spécifier le mode d'opération de chacun des registres spécifiés.

15. Dispositif compteur/temporisateur selon la revendication 1, dans lequel ledit dispositif compteur/temporisateur est incorporé à un microcalculateur monopuce conjointement avec un microcalculateur (100) relié au dispositif compteur/ temporisateur.

16. Microcalculateur monopuce comportant:

un microcalculateur (100) comprenant une unité de traitement centrale (200), une partie de mémoire de programme (202) pour mémoriser des programmes devant être exécutés par ladite unité de traitement centrale, et une partie de mémoire de données (201) pour mémoriser des données qui sont utilisées pour l'exécution desdits programmes; et

un compteur/temporisateur (100') relié audit microcalculateur (100) et comprenant des moyens de génération d'instruction de tâche (205) capables de générer successivement une pluralité d'instructions de tâche correspondant à des opérations de compteur/temporisateur à exécuter, une par une, des moyens de commande d'instructions de tâche (206) sensibles à chacune des instructions de tâche générées successivement par lesdits moyens de génération d'instruction de tâche (205), pour générer un signal de commande, et des moyens d'opération de compteur/temporisateur (207) pour effectuer une opération de compteur/temporisateur correspondant à chacune des instructions de tâche successivement générées, en réponse audit signal de commande.

17. Microcalculateur monopuce selon la revendication 16, dans lequel lesdits moyens d'opération de compteur/temporisateur (207) comprennent un un groupe de registres (105) constitué d'une pluralité de registres capables chacun d'effectuer l'une quelconque de plusieurs fonctions de registre nécessaires pour lesdites opérations de compteur/temporisateur, des moyens formant une unité arithmétique (106 à 109) pour effectuer une opération arithmétique/logique en fonction de données provenant dudit groupe de registres (105), et un fil de données (116 à 118) pour transférer des données entre ledit groupe de registres et ladite unité arithmétique.

18. Microcalculateur monopuce selon la revendication 17, dans lequel chacune des instructions de tâche générées par lesdits moyens de génération d'instructions de tâche (205) est constituée d'une pluralité de bits, et lesdits bits comprennent des bits pour spécifier des registres dans ledit groupe de registres (105) desdits moyens d'opération de compteur/temmporisateurs (207) en tant que registres devant être utilisés dans l'une desdites instructions de tâchne, et des bits pour spécifier le mode d'opération de chacun des registres spécifiés.

13

# FIG. I

FIG. 2

I/O PIN SELECTOR

INPUT/OUTPUT LATCHES

INPUT PIN NO. CONTROL

TASK SIGNAL GENERATOR ( COUNTER )

TASK ADDRESS DECODER

TASK NO. 0
TASK NO. 1
TASK NO. 15

OPERATION CONTROL DECODER

OUTPUT LATCHES

DESTINATION LATCH

ALU A B

SOURCE LATCH

SOURCE LATCH

REGISTER NO. 0
REGISTER NO. 1
REGISTER NO. 2

REGISTER NO. 13
REGISTER NO. 14
REGISTER NO. 15

WRITE DATA BUFFER

READ DATA BUFFER

101  102  103  205  206  207  203  112  111  119  113  104  114  115  208  209  210  211  110  106  116  107  108  109  118  105  117

EP 0 180 196 B1

EP 0 180 196 B1

## FIG. 3

| 31 | 30          27 | 26       25 | COUNTER/TIMER REGISTER NO. 22 21 | CAPTURE/COMPARE REGISTER NO. 18 17 | COUNTING OPERATION CONDITION BITS |
|----|----------------|-------------|-----------|---------------|---------|
| X  | TASK  NO.      | INPUT/OUTPUT SPECIFYING BIT | COUNTER/TIMER REGISTER  NO. | CAPTURE/COMPARE REGISTER  NO. | COUNTING OPERATION CONDITION  BITS |

| 14          13     12 11 | CLOCK INPUT PIN NO. 8 7 | CAPTURE/RESET SIGNAL INPUT PIN NO. 4 3 | OUTPUT PIN NO. 0 |
|--------------------------|-----------|------------------|----------|
| CAPTURE/COMPARE OPERATION CONDITION BITS | CLOCK  INPUT  PIN  NO. | CAPTURE/RESET SIGNAL INPUT PIN NO. | OUTPUT  PIN  NO. |

# FIG. 4

PRECHARGE ─   ┌─ DISCHARGE

CLOCK $\phi_1$ (a)
CLOCK $\phi_2$ (b)
1ST READ BUS 116 (c)
1ST SOURCE LATCH 106 (d)
ALU 108 (e)
DESTINATION LATCH 109 (f)
WRITE BUS 118 (g)
COUNTER / TIMER REGISTER (h)
CAPTURE REGISTER (i)
2ND READ BUS 117 (j)
2ND SOURCE LATCH (k)
OUTPUT LATCH 110 ($\ell$)

T1 T2 T3 T4 T5    T6 T7 T8

EP 0 180 196 B1

# FIG. 5

| 30        27 | 26 | 25        22 | 21        18 | 17 | 16 | 15 |
|---|---|---|---|---|---|---|
| TASK NO. | INPUT/OUTPUT SPECIFYING BIT | COUNTER/TIMER REG. NO. | CAPTURE REG. NO. | CLOCK SPECIFYING BIT | COUNTING OPERATION CONTROL BIT | RESET CONTROL BIT |
| $k_i$ | 0 | $n_i$ | $m_i$ | 1 | 1 | — |

| 14 | 13 | 12        11 | 8        7 | 4        3 | 0 |
|---|---|---|---|---|---|
| POST-TRANSFER CONTROL BIT | — | CLOCK INPUT PIN NO. | CAPTURE SIGNAL INPUT PIN NO. | OUTPUT PIN NO. | |
| 1 | — | $p_i$ | $q_i$ | — | |

# FIG. 6

$n_i$−TH REGISTER

$m_i$−TH REGISTER

$(q_i)$

$(p_i)$

EP 0 180 196 B1

## FIG. 7

| TASK NO. | INPUT/OUTPUT SPECIFYING BIT | COUNTER/TIMER REG. NO. | CAPTURE REG. NO. | CLOCK SPECIFYING BIT | COUNTING OPERATION CONTROL BIT | RESET CONTROL BIT |
|---|---|---|---|---|---|---|
| 30        27 | 26 | 25        22 | 21        18 | 17 | 16 | 15 |
| $k_2$ | 0 | $n_2$ | $m_2$ | 1 | 1 | — |

| POST-TRANSFER CONTROL BIT | — | CLOCK INPUT PIN NO. | CAPTURE SIGNAL INPUT PIN NO. | OUTPUT PIN NO. |
|---|---|---|---|---|
| 14 | 13 | 12  11        8 | 7        4 | 3        0 |
| 0 | — | $p_2$ | $q_2$ | — |

## FIG. 8

$n_2$-TH REGISTER

$m_2$-TH REGISTER

($q_2$)

($p_2$)

EP 0 180 196 B1

## FIG. 9

| 30          27 | 26                                  | 25          22 | 21            18 | 17                          | 16                                        | 15                        |
|----------------|-------------------------------------|----------------|------------------|-----------------------------|-------------------------------------------|---------------------------|
| TASK NO.       | INPUT/ OUTPUT SPECIFYING BIT        | COUNTER/TIMER REG. NO. | COMPARE REG. NO. | CLOCK SPECIFYING BIT | COUNTING OPERATION CONTROL BIT | RESET CONTROL BIT |
| $k_3$          | 1                                   | $n_3$          | $m_3$            | 0                           | 1                                         | 0                         |

| 14                               | 13                               | 12                             | 11           8 | 7              4 | 3              0 |
|----------------------------------|----------------------------------|--------------------------------|----------------|------------------|------------------|
| POST- TRANSFER CONTROL BIT       | POST- COINCIDENCE CONTROL BIT    | LOGICAL VALUE SPECIFYING BIT   | CLOCK INPUT PIN NO. | RESET INPUT PIN NO. | OUTPUT PIN NO. |
| —                                | 1                                | 0                              | —              | —                | $o_3$            |

## FIG. 10

$n_3$-TH REGISTER

$m_3$-TH REGISTER

$(o_3)$

EP 0 180 196 B1

# FIG. 11

| 30　　　27 | 26 INPUT/OUTPUT SPECIFYING BIT | 25　　　22 COUNTER/TIMER REG. NO. | 21　　　18 COMPARE REG. NO. | 17 CLOCK SPECIFYING BIT | 16 COUNTING OPERATION CONTROL BIT | 15 RESET CONTROL BIT |
|---|---|---|---|---|---|---|
| TASK NO. | | | | | | |
| $k_4$ | 1 | $n_4$ | $m_4$ | 0 | 1 | 1 |

| 14 POST-TRANSFER CONTROL BIT | 13 POST-COINCIDENCE CONTROL BIT | 12 LOGICAL VALUE SPECIFYING BIT | 11　　　8 CLOCK INPUT PIN NO. | 7　　　4 RESET INPUT PIN NO. | 3　　　0 OUTPUT PIN NO. |
|---|---|---|---|---|---|
| — | 0 | 0 | — | $q_4$ | $o_4$ |

# FIG. 12

$n_4$-TH REGISTER

$m_4$-TH REGISTER

$(q_4)$

$(o_4)$

$W_1$　$C_1$　　$W_2$　　$C_2$　$W_3$

EP 0 180 196 B1